# EUROPÄISCHE PATENTSCHRIFT

(11) **EP 2 531 344 B1**
(45) Veröffentlichungstag und Bekanntmachung des Hinweises auf die Patenterteilung: **19.10.2016**
(21) Anmeldenummer: 11718245.1
(22) Anmeldetag: 01.02.2011
(51) Int. Cl.: B29C 67/00, B22F 3/105, B29K 105/00

(54) **VORRICHTUNG ZUM HERSTELLEN DREIDIMENSIONALER MODELLE**
DEVICE FOR PRODUCING THREE-DIMENSIONAL MODELS
DISPOSITIF DE FABRICATION DE MODÈLES TRIDIMENSIONNELS

(30) Priorität: 04.02.2010 DE 102010006939
(43) Veröffentlichungstag der Anmeldung: 12.12.2012
(73) Patentinhaber: Voxeljet AG, 86316 Friedberg (DE)
(72) Erfinder: GRASEGGER, Josef, 86391 Stadtbergen (DE); HARTMANN, Andreas, Dominik, 86391 Stadtbergen (DE)
(74) Vertreter: Helbig, Christian
(86) Internationale Anmeldenummer: PCT/DE2011/000092
(87) Internationale Veröffentlichungsnummer: WO 2011/095157

(56) Entgegenhaltungen:
- WO-A1-2004/108398
- DE-A1-102007 050 953
- DE-C1- 10 053 741
- FR-A1- 2 856 614
- US-B1- 6 722 872

## Beschreibung

Die Erfindung bezieht sich auf eine Vorrichtung zum Herstellen dreidimensionaler Modelle gemäß dem Oberbegriff des Patentanspruches 1.

In der europäischen Patentschrift EP 0 431 924 B1 wird ein Verfahren zur Herstellung dreidimensionaler Objekte aus Computerdaten beschrieben. Dabei wird ein Partikelmaterial in einer dünnen Schicht auf eine gegebenenfalls mit einem Behälter umfassten Bauplattform aufgetragen und dieses anschließend selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wir die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt.

Das, wie beschrieben, aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann vom Restpulver z.B. durch Abbürsten befreit werden.

In ähnlicher Weise arbeiten auch andere Pulver-gestützte Rapid-Prototyping-Prozesse, wie z.B. das selektive Lasersintern oder das Elektron-Beam-Sintern bei denen jeweils ebenso ein loses Partikelmaterial schichtweise ausgebracht und mit Hilfe einer gesteuerten physikalischen Strahlungsquelle selektiv verfestigt wird.

Im Folgenden werden alle diese Verfahren unter dem Begriff "dreidimensionale Druckverfahren" oder 3D-Druckverfahren zusammengefasst.

Bei dem Vorgang des Schichtaufbaus bei einem dreidimensionalen Druckverfahren gilt ein besonderes Augenmerk der Vertikal-Bewegung (Z-Richtung) der Bauplattform. Diese erfolgt in sehr kleinen Schritten, nämlich der Partikelschichthöhe, typischerweise in der Größenordnung von 20 µm - 500 µm.

Die exakte Einhaltung der Schrittweite der Absenkung der Bauplattform ist für viele Verfestigungsmechanismen entscheidend, muss doch der Verbund des Partikelmaterials nicht nur in der horizontalen Ebene sondern auch in vertikaler Richtung sicher gestellt werden. Fällt die Absenkung der Bauplattform aufgrund einer fehlerhaften Bewegung der Z-Achse beispielsweise größer aus, kann dies zur Folge haben, dass die aktuelle Schicht nicht mehr mit der darunterliegenden Schicht verbunden werden kann. Dies hat eine sogenannte Delamination zur Folge, die zu einem unbrauchbaren Bauteil führt.

Die Z-Bewegung der Bauplattform beeinflusst zudem die Genauigkeit des Bauteils. Die Gesamtabweichung der Ist- von der Soll-Bewegung über den Verfahrweg der Bauplattform geht linear in die Bauteiltoleranz ein und ist aus diesem Grunde unerwünscht.

Daneben wird aber auch jede andere Abweichung der Ist- von der Soll-Bewegung der Bauplattform in Form von Fehlern im Bauteil sichtbar. Zu diesen Abweichungen gehören beispielsweise Taumelbewegungen der Bauplattform aber auch Verschiebungen in der horizontalen Ebene.

Als Lasten wirken auf die Bauplattform die eigenen Gewichtskräfte sowie die mit Voranschreiten des Schichtbauprozesses wachsenden Gewichtskräfte durch die Pulverschüttung und das Bindemittel beziehungsweise das Modell.

Gegen jede Bewegung der Bauplattform im Bauzylinder wirken zudem Reibungskräfte der Dichtung zwischen Bauplattform und einer Bauzylinderwandung. Eine solche Dichtung ist erforderlich, damit das Pulver nicht durch den Spalt zwischen Bauplattform und Behälterwandung hindurch laufen kann und damit zu Störungen, bis hinzu Blockaden führen kann. Diese Reibungskräfte der Dichtungen mit der Behälterwand können im Fall eines Fehlers, wie beispielsweise bei einer Blockade der Dichtung, sehr groß werden.

Nicht zuletzt werden durch den Antrieb selbst auch Kräfte und Momente erzeugt, die direkt auf die Bauplattform wirken.

Derzeitige Lösungen zur Führung und Bewegung der Bauplattform bestehen aus einer sogenannten Z-Achse, die aus einer Führung und einer Antriebseinheit besteht. Die Führung stellt die minimale Abweichung der Ist- von der Soll-Bewegung der Bauplattform um alle drei Raumwinkel und die beiden horizontalen Richtungskomponenten sicher. Die Antriebseinheit definiert die exakte vertikale Position der Plattform.

Aus der WO 01/96048 A1 ist beispielsweise ein Aufbaubehälter bekannt, der einen verschiebbaren Kolben aufweist und mittels einer Kopplungsvorrichtung mit einer Spindel verbunden ist, die wiederum mittels eines Motors angetrieben werden kann.

Ein ähnlicher Mechanismus ist beispielsweise aus der WO 2007/039450 und der US 5,387,380 bekannt.

Üblicherweise werden eine oder mehrere Linearführungen mit Kugelumlauf-gelagerten Schlitten verwendet. Als Antriebseinheit haben sich Kugelgewinde-Spindelantriebe mit Servo- oder Schrittmotoren etabliert Dies ist beispielsweise aus der EP 1 322 438 B1 bekannt, wobei dort auch noch weitere Antriebsmechanismen für eine Höhenverstellung beschrieben werden.

Die Steifigkeit einer Führung gegen Taumelbewegungen der Bauplattform um die X- oder Y-Achse wird von der Länge eines Führungsschlittens oder vom Abstand mehrerer Führungsschlitten auf der Führungsbahn bestimmt. Dieser Abstand muss bei einer entsprechenden Gesamtlänge der Führung entsprechend berücksichtigt werden.

Bei 3D-Druckanlagen darf eine solche Führung wiederum nicht die sogenannte Bauebene durchdringen, da hier andere Achsen zur Bewegung des Druckkopfes laufen. Daraus folgt, dass die Achse zur Führung entweder außerhalb der Bauebene platziert sein muss oder sich gänzlich unter dieser befindet. Im ersten Fall sind die Momente, die auf die Achse wirken um einen zusätzlichen Hebel vergrößert.

Die Momentensteifigkeit üblicher Führungssysteme, wie beispielsweise Kugelumlaufbuchsen auf Führungsschienen, wird über den Abstand der Krafteinleitungspunkte in die Führungsschiene beispielsweise von Führungsschlitten realisiert. Daraus ergibt sich, dass eine größere Momentensteifigkeit einen größeren Abstand der Führungsschlitten bedeutet. Bei Verwendung eines Wechselsystems für Job-Boxen, enthaltend eine Bauplattform und eine Umrandung, muss die Führung jedoch mindestens so lange sein wie der Hub der Bauplattform in der Box plus dem Abstand der Führungswagen.

Befindet sich die Führung unter der Bauebene, wird die Position der Bauebene bei höherer Momentensteifigkeit in vertikaler Richtung nach oben verschoben. Dies schränkt die Bedienungsfreundlichkeit dann massiv ein, wenn die Bauebene aufgrund der Gesamthöhe der Anordnung nicht mehr eingesehen werden kann.

In einer anderen bekannten Ausführungsform wird die Führungsaufgabe durch die Behälterwandung übernommen. Zur Aufnahme der möglichen Momente um die X- und Y-Achse werden mehrere auf die Grundfläche der Bauplattform verteilte Spindelantriebe verwendet. Der Nachteil hierbei ist, dass die Führungsgenaulgkeit der Behälterwandung durch die Fertigungsgenaulgkeit bestimmt wird. Die Herstellung solcher anforderungsgerechter Behälterwandungen ist jedoch aufwendig und kostenintensiv. Hierbei muss die gesamte Behälterwandung mechanisch bearbeitet werden, um die notwendigen Toleranzen erfüllen zu können. Darüberhinaus muss die Wandung auch ausreichend steif sein, um die Toleranzen auch bei Belastung, beispielsweise durch Dichtungsreibungskräfte, einhalten zu können.

Aus der DE 10 2007 050 953 A1 ist eine Vorrichtung zur Herstellung dreidimensionaler Bautelle bekannt, wobei die Bauplattform vertikal verschiebbar ist.

Ferner ist aus der WO 2004 108398 A1 ein Antriebssystem für eine Bauplattform bekannt, das aus Führungen besteht, die die Lage der Bauplattform in X- und Y-Richtung sowie in allen Winkellagen definieren und einer Spindel, die durch eine Mutter in der Bauplattform geführt wird.

Bei beiden vorzitierten Dokumenten werden Spindeln eingesetzt, die die Bauplattform in z-Richtung verschieben.

FR 2 856 614 A1 offenbart weiter eine Vorrichtung gemäß dem Oberbegriff des Anspruchs 1.

Ausgehend hiervon ist es daher Aufgabe der vorliegenden Erfindung bei einer erfindungsgemäßen Vorrichtung eine noch exaktere Z-Achsen Verschiebung der Bauplattform zu ermöglichen.

Diese Aufgabe wird durch eine Vorrichtung gemäß dem Patentanspruch 1 gelöst.

Gemäß der vorliegenden Erfindung wird eine Vorrichtung zum Herstellen dreidimensionaler Modelle mittels 3-D Druckverfahren beschrieben, wobei Baumaterial auf eine Bauplattform schichtweise aufgetragen wird. Die Bauplattform soll dabei zum Durchführen des Verfahrens, nämlich zum Absenken der Bauplattform um jeweils eine Partikelschicht, in einer Z-Richtung verschiebbar sein und für ein solches Verschieben der Bauplattform sind ein oder mehrere Antriebselemente und ein oder mehrere Führungselemente vorgesehen.

Es soll nochmals ausgeführt werden, dass Z-Richtung hierbei die zur Bauplattformoberfläche, auf die das Bauteil aufgebaut wird, senkrechte Richtung bezeichnet.

Dabei sind Antriebs- und Führungselemente derart angeordnet, dass eine Bewegung der Antriebselemente von der Bewegung des oder der Führungselemente entkoppelt ist. Entkoppelt bedeutet gemäß der vorliegenden Erfindung, dass unerwünschte Bewegungen und Kräfte, die durch die Antriebselemente entstehen, nicht auf die Führungselemente übertragen werden.

Mit einer solchen Vorrichtung ist es nun möglich, dass bei einem 3D-Druckverfahren mittels Schichtbautechnik die notwendige Absenkung der Bauplattform in Z-Richtung und damit die notwendigen Antriebs- und Führungsaufgaben, trotz Verwendung von Bauplattformen großer Abmessungen, unter den gegebenen Belastungen mit hoher Genauigkeit erfüllt werden können.

Gemäß einer bevorzugten Ausführungsform der vorliegenden Erfindung sind mindestens zwei Antriebselemente vorgesehen. Eine solche Ausgestaltung kann den Vorteil aufweisen, dass ein Antrieb mit möglichst geringen unerwünschten Bewegungen stattfinden kann.

Darüberhinaus kann es vorteilhaft sein, wenn bei einer erfindungsgemäßen Vorrichtung die Antriebselemente zumindest teilweise Spindelantriebe aufweisen. Spindelantriebe haben sich insbesondere als vorteilhaft erwiesen, da mit Ihnen ein relativ exakter Antrieb erfolgen kann.

Sind die Antriebselemente dabei gemäß einer weiteren bevorzugten Ausführungsform unterhalb der Bauplattform angeordnet, so kann die vertikale Kraft sehr gut abgeleitet werden und es entstehen verminderte Momente um die horizontalen Achsen.

In einer Ausprägung der Erfindung wird durch den Einsatz mehrerer Spindeln das Torsionsmoment der Spindelmuttern weitgehend von den über die Bauplattform torsionssteif verbundenen Spindeln aufgenommen.

Zur optimalen Aufnahme der vertikalen Kräfte, werden in einer weiteren bevorzugten Ausführung der Erfindung vier Spindeln in den Ecken der Bauplattform angeordnet. Als optimale Anbindungspunkte hinsichtlich der Durchbiegung der Bauplattform, werden die Besselpunkte auf den Bauplattformdiagonalen betrachtet. Geht man von einem optimal steifen System aus, genügt zur Funktion auch die Kombination einer einzelnen Spindel mit einer einzelnen Führung.

Auch können durch die torsionssteife Verbindung mehreren aber mindestens zwei Spindeln über eine Antriebsplatte die Torsionsmomente der Spindeln aufgenommen werden und somit abgeleitet werden.

Um eine ausreichende Positioniergenauigkeit und Wiederholgenauigkeit in vertikaler Richtung zu gewährleisten, werden üblicherweise vorgespannte Spindelmuttern verwendet. Hierbei ist das axiale wie radiale Spiel reduziert. Durch Fertigungs- und Montagetoleranzen neigen derartige Spindelantriebe beim Verfahren zum Taumeln. Dies bedeutet, dass die Einspannstelle der Spindel sich relativ zur Spindelmutter quer zur Spindelachse bewegt. Der Taumelhub beispielsweise aufgrund eines Winkelfehlers nimmt mit dem Abstand der Spindelmutter zur Spindeleinspannung zu. Der Taumelhub kann bei unzureichender Führung zu einer ungewünschten lateralen Bewegung der Bauplattform während des Bauens führen. Betroffene, durch die Maschine generierte Bauteile weisen dann in vertikaler Richtung periodische Stufen auf.

Eine ausreichend steife Führung verhindert die Bewegung der Bauplattform. Bei Auftreten der Taumelbewegung wird sich der Spindelantrieb elastisch verformen. Auf die Führung wirken dann entsprechend hohe Kräfte und daraus resultierende Momente. Die Führung muss in diesem Fall wieder sehr lang dimensioniert sein. Damit vergrößert sich aber, wie oben beschrieben, die Bauhöhe des gesamten Gerätes, was unerwünscht ist.

Deshalb ist es notwendig, die Momente auf die Führung zu reduzieren. Dies erfolgt erfindungsgemäß durch Entkopplung der Bewegung des Spindelantriebs von der Bewegung der Bauplattform in horizontaler Richtung.

Gemäß einer bevorzugten Ausführungsform kann bei einer erfindungsgemäßen Vorrichtung das oder die Antriebselemente über eine sogenannte Ausgleichsplattform mit der Bauplattform in Eingriff stehen.

Wird die Maschine als System mit Wechselbehältern ausgelegt, kann es sinnvoll sein, die Bauplattform des Wechselbehälters (Jobboxboden) durch eine zusätzliche Hubplattform schaltbar mit einer Maschinenachse in Eingriff zu setzen.

So wäre es beispielsweise denkbar, dass sich Antriebsspindeln nicht direkt an der Bauplattform sondern an der Ausgleichsplattform abstützen. Diese kann sich in der horizontalen Ebene frei gegenüber der Bauplattform bewegen. Über der Ausgleichsplattform befindet sich die Hubplattform mit einer schaltbaren Verbindung zur Bauplattform. Die Hub- und Ausgleichsplattform sind über Axiallager derart verbunden, dass in vertikaler Richtung kein Spiel auftritt und in der horizontalen Ebene keine Kräfte übertragen werden können. Die Hubplattform ist über eine Führung mit einem Gestell verbunden, das horizontale Bewegungen einschränkt oder gar unterbindet. Die Spindelmuttern befinden sich radial drehbar gelagert auf einer Bodenplatte, die wiederum mit dem Gestell verbunden ist. Die Spindelmuttern werden entweder einzeln oder z.B. über einen gemeinsamen Riemen angetrieben.

Die Taumelbewegungen der einzelnen Spindeln führen in dieser Anordnung zu einer resultierenden gemeinsamen Bewegung an der Ausgleichsplattform. Diese Bewegung wird dann weder an die Hubnoch an die Bauplattform weitergeleitet.

In einer weiteren Ausführungsform werden die Spindeln einzeln drehmomentsteif aber radial verschieblich an der Hubplattform befestigt. Diese Art der Lagerung kann z.B. durch Einsatz von Festkörpergelenken oder Gleitlager realisiert werden. Der Vorteil gegenüber der zuvor beschriebenen Variante ist die Vermeidung von Verspannungen in der Anordnung.

Durch die Entkopplung von Führung und Antrieb kann das Torsionsmoment der Spindeln nicht mehr auf die Führung übertragen werden. Hierzu ist es vorteilhaft, wenn mindestens zwei Spindeln eingesetzt werden, die ihr Antriebsmoment gegenseitig abstützen.

Zur näheren Erläuterung wird die Erfindung anhand bevorzugter Ausführungsbeispiele nachfolgend unter Bezugnahme auf die Zeichnung näher beschrieben.

In der Zeichnung zeigt dabei:
Figur 1 eine erfindungsgemäße Vorrichtung gemäß einer bevorzugten Ausführungsform in einer Frontalansicht;
Figur 2 eine bevorzugte Ausführungsform der vorliegenden Erfindung in einer räumlichen Darstellung;
Figur 3 einer weitere bevorzugte Ausführungsform der vorliegenden Erfindung in einer Schnittansicht; und
Figur 4 einen vergrößerten Ausschnitt von Figur 3; und
Figur 5 eine noch weitere bevorzugte Ausführungsform der vorliegenden Erfindung in einer Schnittansicht.

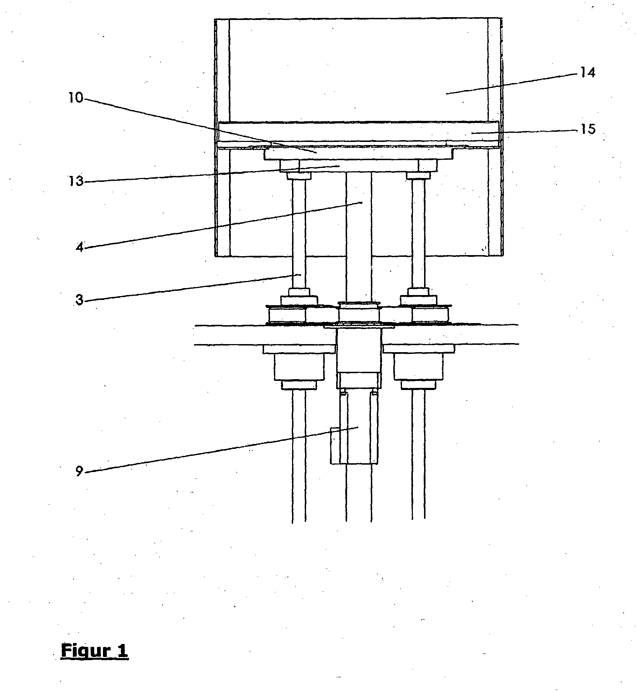

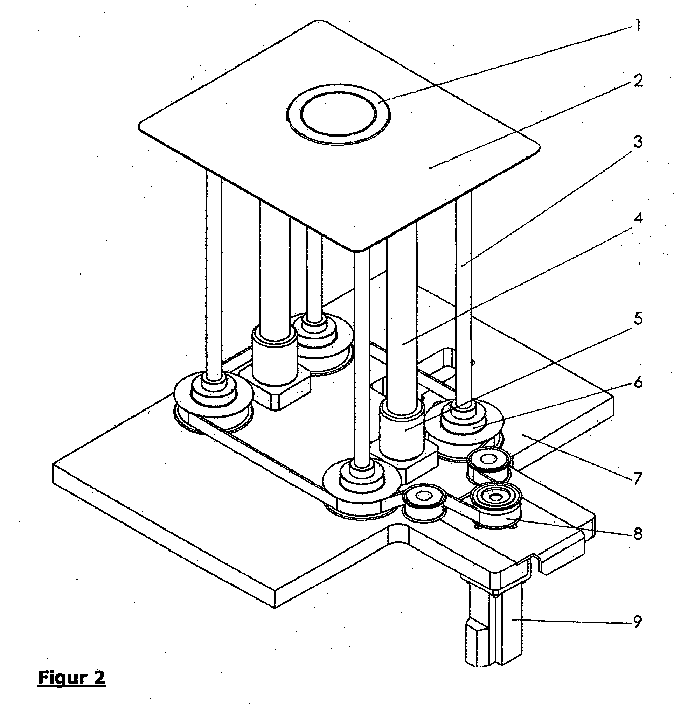

Mit Bezug auf Figur 1 und Figur 2 wird eine bevorzugte Ausführungsform der vorliegenden Erfindung beschrieben. Bei der gezeigten Ausführungsform findet bei einem Verfahren zum schichtweisen Aufbau von Modellen der Bauprozess auf einer in der Darstellung gezeigten, vertikal positionierbaren Bauplattform 15 statt.

Die Bauplattform 15 bewegt sich dabei in einer allseitigen Umrahmung. Diese Umrahmung ergibt zusammen mit der Bauplattform 15 den Wechselbehälter(14) oder Jobbox.

Die Jobbox 14 wird beispielsweise über Rollenführungen in die 3-D-Druckmaschine eingebracht, und in einer definierten Position gegen Verschiebungen in alle Richtungen verriegelt. Die Bauplattform 15 wird zum Aufbauen von dreidimensionalen Modellen in Richtung einer Z-Achse (vertikale Maschinenachse) verfahren. Dazu geht die Bauplattform 15 gemäß der gezeigten bevorzugten Ausführungsform über ein schaltbares Spannsystem 1 eine feste Verbindung mit einer Hubplattform 2 ein, mittels derer das Spannsystem 1 und damit der darauf angebrachte Jobboxboden, beziehungsweise die Bauplattform 15 vertikal verfahren werden kann.

In der gezeigten Ausführungsform sind vier Antriebsspindeln 3 vorgesehen, die mit der Hubplattform 2 verbunden sind, und diese vertikal positionieren.

Darüberhinaus ist mindestens ein Führungselement 4 gemäß dem gezeigten Beispiel vorgesehen, das mit der Hubplattform 2 verbunden ist, und diese Hubplattform 2 exakt vertikal führen beziehungsweise horizontale Kräfte aufnehmen kann.

Weiterhin trägt das Maschinengestell 7 die Führungslager 5 und ein Spindelantriebssystem.

Ein Spindelantriebssystem gemäß der gezeigten bevorzugten Ausführungsform der Erfindung besteht aus vier drehbar gelagerten Spindelmuttern 6. Alle Spindelmuttern 6 sind wiederum über einen Zahnriemen 8 mit einem Antriebsmotor 9 verbunden.

Zum Verfahren der Bauplattform 15, beziehungsweise der Hubplattform 2 in Z-Richtung treibt der Motor 9 über den Zahnriemen 8 alle Spindeln 3 mit gleicher Drehzahl an. Damit ist das gleichmäßige Ausfahren der Z-Achse der Vorrichtung gesichert.

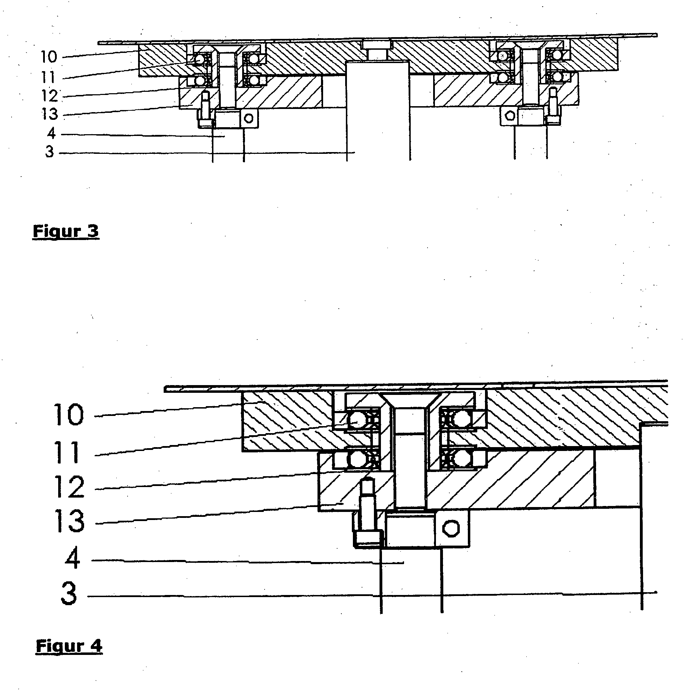

Der Figur 3 und 4 kann entnommen werden, dass gemäß der dargestellten bevorzugten Ausführungsform der vorliegenden Erfindung die Hubplattform 2 in zwei Platten unterteilt ist, nämlich in eine Führungsplatte 10 und eine Antriebsplatte 13. Die Führungsplatte 10 trägt das Spannsystem 1 und ist fest mit den Führungselementen, die hier als Führungsstangen 4 ausgebildet sind, verbunden.

Die Antriebsplatte 13 trägt verdrehungsfest die vier Antriebsspindeln 3. Weiterhin sind die Antriebsplatte 13 und die Führungsplatte 10 über ein Wälzlager miteinander verbunden. Das Wälzlager ist dabei beispielsweise eine Kombination aus Lagerscheiben 12 von Axial-Nadellagern und einem Kugelkäfig 11 von Axial-Rillenkugellagern. Diese Kombination ermöglicht Freiheitsgrade in X- und Y-Richtung. In Z-Richtung ist das System damit spielfrei gelagert.

Im Aufbau befindet sich unten die Antriebsplatte 13. Durch große Bohrungen ragen die Führungsstangen 3 berührungslos durch die Antriebsplatte 13. Die Führungsstangen 3 sind dann mit der Führungsplatte 10 verbunden.

Während des Betriebes werden störende Bewegungen von den Antriebsspindeln 3 auf die Antriebsplatte 13 übertragen. Durch die Lagerung 11 und 12 werden die Bewegungen entkoppelt. Die exakte Führung der Bauplattform wird durch die Führungsplatte 10 erreicht, die durch Führungstangen 3 mit dem Gehäuse in horizontaler Verbindung steht.

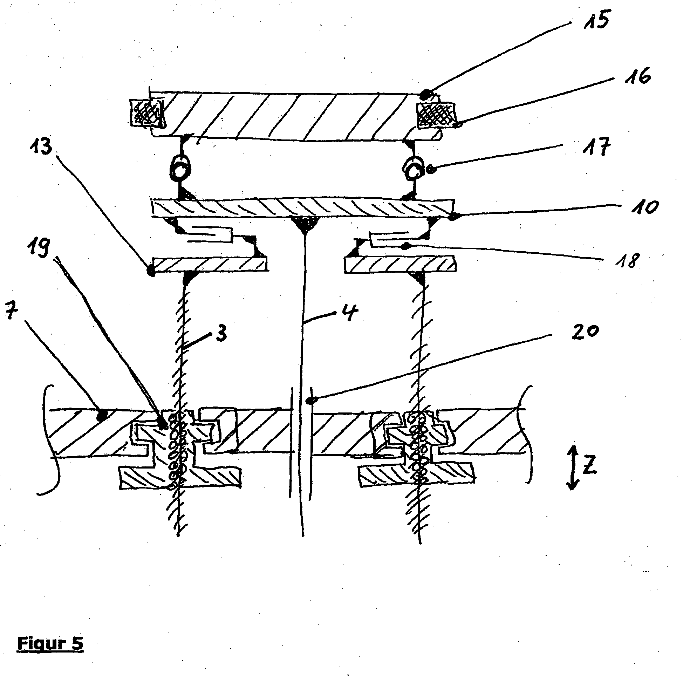

In Figur 5 ist eine weitere Ausgestaltung der erfindungsgemäßen Vorrichtung dargestellt.

Eine Bauplattform 15 ist mit Dichtungen 16 in einer hier nicht dargestellten Umrandung in Z-Richtung verschieblich angeordnet.

Die Bauplattform 15 ist gemäß der gezeigten bevorzugten Ausführungsform über schaltbare Verbindungen 17 mit der Führungsplatte 10 verbunden. An der Führungsplatte 10 greift die Führung 4 an, die in einer Linearführung 20 durch das Maschinengestell 7 beführt wird. Weiterhin ist die Führungsplatte 10 über Ausgleichslager 18 mit der Antriebsplatte 13 verbunden, an der wiederum die Antriebsspindeln 3 angreifen, die über einen Spindelantrieb 19 zum versfiellen der Bauplattform 15 angetrieben werden.

### Bezugszeichenliste

- 1: Spannsystem
- 2: Hubplattform
- 3: Antriebsspindeln
- 4: Führung
- 5: Führungslager
- 6: Spindelmutter
- 7: Maschinengestell
- 8: Zahnriemen
- 9: Motor
- 10: Führungsplatte
- 11: Kugelkäfig
- 12: Lagerung
- 13: Antriebsptatte
- 14: Jobbox/Wechselbehälter
- 15: Bauplattform
- 16: Dichtungen
- 17: Schaltbare Verbindung
- 18: Ausgleichslager
- 19: Spindelantrieb
- 20: Linearführung

## Patentansprüche

1. Vorrichtung zum Herstellen dreidimensionaler Modelle mittels 3-D Druckverfahren, wobei Baumaterial auf eine Bauplattform (15) schichtweise aufgetragen wird und die Bauplattform in einer Z-Richtung verschiebbar ist und zum Verschieden der Bauplattform ein oder mehrere Antriebselemente (3) und ein oder mehrere Führungselemente (4) vorgesehen sind, **dadurch gekennzeichnet, dass** das oder die Antriebselemente (3) über eine Ausgleichsplattform (13) mit der Bauplattform (15) in Eingriff stehen und damit Antriebs- und Führungselemente derart angeordnet sind, dass eine Bewegung der Antriebselemente von einer Bewegung des oder, der Führungselemente in horizontaler Richtung entkoppelt ist.

2. Vorrichtung nach Anspruch 1, **dadurch gekennzeichnet, dass** mindestens zwei Antriebselemente (3) vorgesehen sind.

3. Vorrichtung nach einem der vorhergehenden Ansprüche, **dadurch gekennzeichnet, dass** die Antriebselemente (3) zumindest teilweise Spindelantriebe aufweisen.

4. Vorrichtung nach einem der vorhergehenden Ansprüche, **dadurch gekennzeichnet, dass** das oder die Antriebselemente (3) unterhalb der Bauplattform (15) angeordnet sind.

5. Vorrichtung nach einem der vorhergehenden Ansprüche, **dadurch gekennzeichnet dass** die Ausgleichspfattform über eine Hubplattform (2) mit der Bauplattform in Eingriff steht.

## Claims

1. A device for producing three-dimensional models by means of 3D printing methods, wherein construction material is applied in layers onto a construction platform (15) and the construction platform is displaceable in a Z direction, and one or more drive elements (3) and one or more guide elements (4) are provided for displacement of the construction platform, **characterised in that** the one or more drive elements (3) engage with the construction platform (15) via a balancing platform and the drive and guide elements are thereby arranged such that a movement of the drive elements is disconnected from a movement of the one or more guide elements in a horizontal direction.

2. The device according to claim 1, **characterised in that** at least two drive elements (3) are provided.

3. The device according to any one of the preceding claims, **characterised in that** the drive elements (3) at least partly comprise screw drives.

4. The device according to any one of the preceding claims, **characterised in that** the one or more drive elements (3) are arranged below the construction platform (15).

5. The device according to any one of the preceding claims, **characterised in that** the balancing platform engages with the construction platform via a lifting platform (2).

## Revendications

1. Dispositif de construction de modèles tridimensionnels au moyen de procédés d'impression 3D, dans lequel le matériau de construction est appliqué par couches sur une plateforme de construction (15) et ladite plateforme de construction est déplaçable dans une direction Z, et dans lequel on prévoit un ou plusieurs éléments d'entraînement (3) et un ou plusieurs éléments de guidage (4) pour le déplacement de la plateforme de construction, **caractérisé en ce que** le ou les éléments d'entraînement (3) viennent en prise avec la plateforme de construction (15) par une plateforme d'équilibre, disposant ainsi lesdits éléments d'entraînement et de guidage de sorte qu'un mouvement des éléments d'entraînement soit découplé d'un mouvement desdits un ou plusieurs éléments de guidage en direction horizontale.

2. Dispositif selon la revendication 1, **caractérisé en ce que** l'on prévoit au moins deux éléments d'entraînement (3).

3. Dispositif selon l'une quelconque des revendications précédentes, **caractérisé en ce que** les éléments d'entraînement (3) comportent, au moins partiellement, des entraînements à bronche.

4. Dispositif selon l'une quelconque des revendications précédentes, **caractérisé en ce que** le ou les éléments d'entraînement (3) sont disposés au-dessous de la plateforme de construction (15).

5. Dispositif selon l'une quelconque des revendications précédentes, **caractérisé en ce que** la plateforme d'équilibre vient en prise dans la plateforme de construction par une plateforme de levage (2).
